# EUROPÄISCHE PATENTSCHRIFT

(11) **EP 1 229 490 B1**
(45) Veröffentlichungstag und Bekanntmachung des Hinweises auf die Patenterteilung: **01.09.2010**
(21) Anmeldenummer: 02001101.1
(22) Anmeldetag: 23.01.2002
(51) Int. Cl.: G06K 15/02, B41B 19/00

(54) **Vorrichtung und Verfahren zur Verbesserung der Druckeffizienz**
Apparatus and method for enhancing printing efficiency
Appareil et méthode pour améliorer l'efficacité d'impression

(30) Priorität: 06.02.2001 US 777475
(43) Veröffentlichungstag der Anmeldung: 07.08.2002
(73) Patentinhaber: Eastman Kodak Company, Rochester NY 14650-2201 (US)
(72) Erfinder: Housel, Edward M., Rochester, NY 14624 (US)
(74) Vertreter: Wagner & Geyer

(56) Entgegenhaltungen:
- EP-A- 0 703 524
- EP-A- 0 963 104
- WO-A-98/32096

## Beschreibung

Die vorliegende Erfindung betrifft die digitale Bildaufzeichnung zum Drucken von Dokumenten und Bildern sowie Vorrichtungen und Verfahren zur Verbesserung der Druckeffizienz.

Digitale Hochgeschwindigkeitsdrucker werden heute verbreitet für zahlreiche Produktionsprozesse eingesetzt, vom Drucken eines einzelnen Dokuments bis hin zur auflagenstarken Anfertigung von Dokumenten in mehreren Exemplaren. In einem typischen System wird das zu druckende Dokument oder Bild durch digitale Daten dargestellt. Diese Daten lassen sich entweder durch Abtasten oder Scannen erzeugen oder durch digitale Erstellung des Dokuments oder Bildes mithilfe eines Computers. Die Daten werden normalerweise über eine Netzverbindung an einen Drucker übergeben. Die Daten werden dann von einem Rasterbildprozessor (RIP / Raster Image Processor) verarbeitet, der dem Drucker zugeordnet ist, und in ein von dem Drucker verwendbares Format zur Erstellung des Bildes umgesetzt.

Historisch gesehen wurde ein Druckauftrag ausgeführt, sobald er an eine Druckvorrichtung (einen Drucker) gesendet worden war, was dazu führte, dass der Auftrag auch dann abgeschlossen wurde, wenn vor Abschluss des Druckvorgangs Fehler erkannt worden waren. Aus dem Stand der Technik sind Drucker mit Vorrichtungen bekannt, über die ein Bediener einen Druckauftrag abbrechen konnte; allerdings bedurften diese Vorrichtungen normalerweise ein umfangreiches Eingreifen des Bedieners in den Druckauftrag. Daher mussten Druckaufträge aufgrund von Problemen, die später in dem Druckauftrag auftraten, nicht selten mehrmals gedruckt werden. Dies ist besonders bei großen Druckaufträgen problematisch, bei denen mehrere Exemplare eines Dokuments gedruckt werden, da ein erneuter Drucklauf teuer und materialintensiv ist.

Einige neuere Drucker ermöglichen die Erstellung eines Proofsatzes, damit der Bediener den Druckauftrag vor Anfertigung mehrerer Exemplare überprüfen kann. Der Drucker nimmt einen Druckauftrag von dem RIP entgegen und druckt einen Proofsatz. Dies ist in der Druckschrift EP-A-0 963 104 beschrieben. Der Druckauftrag wird dann in eine Warteschlange gestellt, während der Proofsatz kontrolliert wird, bevor der gesamte Produktionslauf gestartet wird. Ein derartiges Proofing stellt ein wirksames Verfahren dar, um Ressourcen zu schonen und Kosten zu senken, indem die Erstellung mehrerer fehlerhafter Exemplare eines Auftrag vermieden wird. Wenn der Bediener Fehler in dem Proofsatz entdeckt, werden die notwendigen Schritte zur Behebung der Fehler durchgeführt, bevor weitere Kosten anfallen oder Abfall produziert wird. Unter Umständen ist die Behebung der Fehler jedoch eine sehr mühselige und zeitaufwändige Aufgabe. Das ist zum großen Teil auf einen Informationsmangel auf Seiten des Bediener zurückzuführen. Oft ist er nicht ausreichend über den Auftrag informiert, um rückwirkend in den Auftrag eingreifen und die entsprechenden Korrekturen vornehmen zu können. Wenn eine Seite des Proofs nicht wie erwartet oder gewünscht gedruckt wird, muss festgestellt werden, um welche Merkmale es sich handelt, die der Seite zugeordnet sind, um festzustellen, warum sie auf diese Weise gedruckt wurde. Diese Merkmale sind für den Bediener des Druckers nicht ohne weiteres verfügbar. Bislang mussten sich der Bediener oder der Auftraggeber mit der ursprünglichen Erstellung des Auftrags auseinandersetzen, um diese Merkmale zu ermitteln. Das zieht einen erheblichen Aufwand zur Erkennung und Behebung des Problems nach sich.

Der vorliegenden Erfindung liegt die Aufgabe zugrunde, Verfahren und Vorrichtungen bereitzustellen, die die Möglichkeit zur Durchführung von Korrekturen an einem Proofsatz verbessern.

Wenn eine digitale Darstellung eines Dokuments oder Bildes von dem RIP verarbeitet wird, können Informationen verfügbar sein oder sind verfügbar, die zur Verarbeitung von Proofsätzen beitragen. Derartige Informationen umfassen Seitenzahl, Ausgabeseitenzahl, Sonderbefehle usw. Die vorliegende Erfindung stellt dem Bediener diese Informationen seitenweise zur Verfügung. In einer vorteilhaften Ausgestaltung stellt die vorliegende Erfindung die von dem RIP verfügbaren Informationen auf den tatsächlich gedruckten Seiten des Proofsatzes zur Verfügung. Die Informationen könnten dann als Hilfsmittel in dem Proofingprozess herangezogen werden. Wenn der Auftrag den Proofingprozess erfolgreich durchlaufen hat, wird das Drucken dieser Informationen im endgültigen Drucklauf unterdrückt.

Nach einem Aspekt betrifft die Erfindung eine Vorrichtung zum digitalen Drucken, die einen digitalen Drucker und eine dem digitalen Drucker zugeordnete Datenverarbeitungseinheit umfasst. Die Datenverarbeitungseinheit verarbeitet Informationen, die zum Drucken durch den Drucker bestimmt sind. In den meisten Fällen ist die Datenverarbeitungseinheit Teil des Druckers, sie kann aber auch eigenständig sein und mit dem Drucker zum Austauschen von Informationen verbunden sein. Die Datenverarbeitungseinheit ist in der Lage, einen Druckauftrag in digitaler Form zu empfangen und zu ermitteln, ob für den Druckauftrag ein Proofsatz des Druckauftrags gedruckt werden muss. Wenn eine derartige Anfrage vorliegt, ermittelt die Datenverarbeitungseinheit, ob es der Druckauftrag erforderlich macht, bestimmte Merkmalsinformationen auf den Seiten des Proofsatzes auszudrucken. Wenn die Datenverarbeitungseinheit ermittelt, dass bestimmte Merkmalsinformationen auf den Seiten des Drucksatzes ausgedruckt werden sollen, dann werden die Seiten von dem digitalen Drucker mit den Merkmalsinformationen auf den entsprechenden Seiten des Proofsatzes gedruckt.

Ein weiterer Aspekt der Erfindung betriff ein Verfahren zum Drucken eines Proofsatzes eines Dokuments. Bei dem Verfahren wird ein Druckauftrag analysiert, um zu ermitteln, ob ein Proofsatz gedruckt werden soll, und um zu ermitteln, ob Merkmalsinformationen aus dem Druckauftrag auf den Seiten des Proofsatzes gedruckt werden sollen. Nachdem diese Feststellung getroffen worden ist, werden die Seiten des Druckauftrags gerastert und in einer Rasterspeicherdatei abgelegt. Die Rasterspeicherdatei umfasst nicht nur die gerasterte Seite, sondern auch gerasterte Informationen bezüglich der Merkmale. Die Seiten des Proofsatzes mit den Merkmalsinformationen werden dann als Proofseite gedruckt. Der Druckauftrag wird in eine Warteschlange gestellt, während der Proofsatz überprüft werden kann. Sobald Bedieneranweisungen eingehen, die anzeigen, dass der Proofsatz freigegeben wird, wird der Druckauftrag in der Warteschlange freigegeben. Der Druckauftrag wird dann in seiner endgültigen Form gedruckt, wobei die Merkmalsinformationen unterdrückt werden, die zuvor auf den Seiten des Proofsatzes gedruckt worden sind.

Die Erfindung wird im folgenden anhand in der Zeichnung dargestellter Ausführungsbeispiele näher erläutert.

Es zeigen
- Fig. 1: ein typisches digitales Drucksystem,
- Fig. 2: ein Ablaufdiagramm zur Darstellung der Aspekte des erfindungsgemäßen Verfahrens.

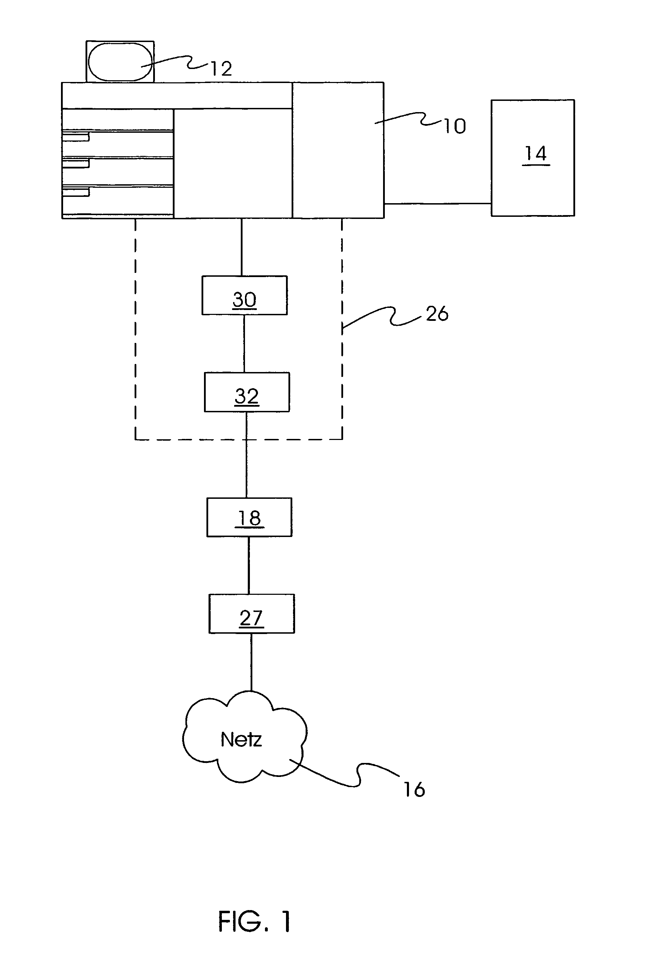

Die vorliegende Erfindung betrifft Verfahren zur Verbesserung des Proofingsystems in einem Drucksystem. Fig. 1 zeigt ein typisches Drucksystem. Das System umfasst einen Drucker 10, eine Bedieneroberfläche 12 und ggf. Endverarbeitungseinrichtungen 14. Der Drucker 10 ist zur Entgegennahme eines Druckauftrags eingerichtet. Im allgemeinen wird ein Druckauftrag von einem Netz 16 über eine Netzschnittstelle übertragen. Im Falle eines eigenständigen Druckers kann der Druckauftrag lokal geladen oder über einen zugehörigen Scanner eingegeben werden. In jedem der beiden Fälle sind dem Druckauftrag Merkmale zugeordnet, die definieren, wie der Druckauftrag zu verarbeiten ist. Die Merkmale können Teil des Druckauftrags sein, so wie er von dem Drucker empfangen wird, oder sie können dem Druckauftrag von dem Druckerbediener mithilfe der Bedieneroberfläche 12 lokal hinzugefügt werden.

Der Drucker 10 umfasst einen Rasterbildprozessor (RIP / Raster Image Processor) 26, der aus dem Netz 16 eingehende Daten empfängt, mit dem der Drucker 10 verbunden ist. Vor Übertragung an den Rasterbildprozessor 26 kann der Druckauftrag in eine Druckwarteschlange 27 im Netz 16 gestellt werden. Der Rasterbildprozessor 26 umfasst eine Verarbeitungseinheit 30, die Steuerbefehle und Daten aus dem Netz 16 empfängt. Die Steuerbefehle werden von der Verarbeitungseinheit 30 in eine Maschinensteuerungssprache umgesetzt, während eingehende Druckaufträge und Programmcodes in einem Druckauftragsspeicher 32 abgelegt werden.

Auf der höchsten Ebene muss der Druckauftrag mit einigen wichtigen Auftragsanforderungsinformationen am RIP 26 eintreffen. Diese Informationen beziehen sich im Allgemeinen auf Merkmale des Druckauftrags. Ein derartiges Merkmal ist die Anforderung eines Proofsatzes.

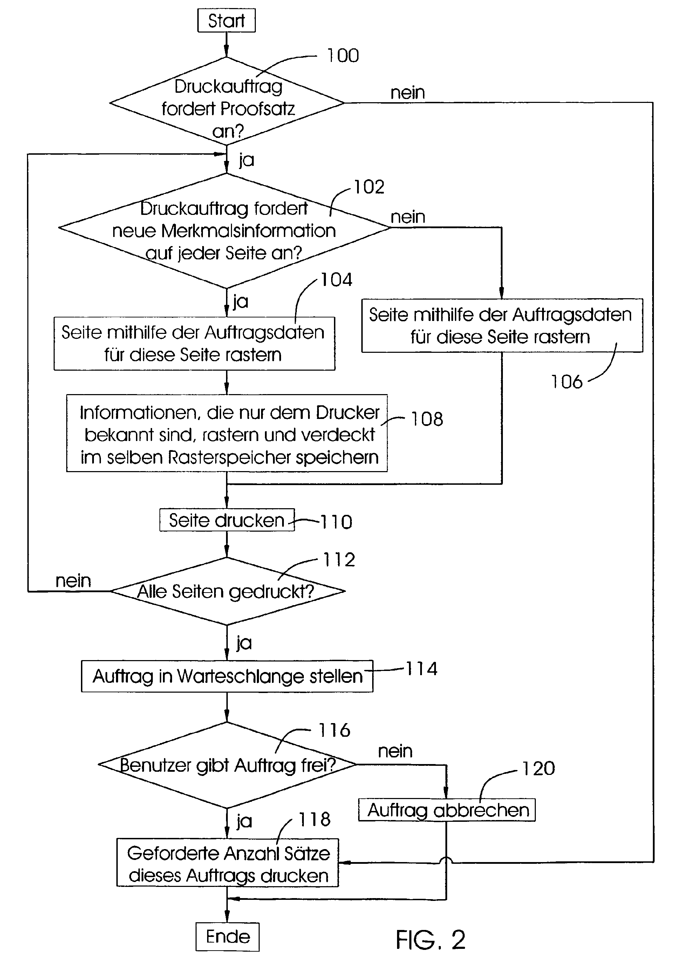

Fig. 2 ist ein Ablaufdiagramm zur Darstellung des Betriebs der vorliegenden Erfindung. In dem erfindungsgemäßen Verfahren analysiert der Drucker 10 durch seinen zugehörigen Rasterbildprozessor 26 den Druckauftrag, um die richtige Handhabung des Auftrags zu ermitteln. Wie in Fig. 2 gezeigt, besteht der erste Schritt 100 nach Übergabe des Druckauftrags an den Rasterbildprozessor 26 darin, zu ermitteln, ob der Druckauftrag einen Proofsatz anfordert. Wenn kein Proofsatz angefordert wird, wird der Druckauftrag gesendet, um normal gedruckt zu werden. Wenn ein Proofsatz angefordert wird, besteht der zweite Schritt 102 darin, den Druckauftrag zu überprüfen, um zu ermitteln, ob die Merkmalsinformationen auf den Proofseiten gedruckt werden sollen. Wenn keine Merkmalsinformationen auf den Seiten des Proofsatzes gedruckt werden sollen, wird die Proofseite in Schritt 106 gerastert und in Schritt 110 zum Drucken weitergeleitet.

Wenn die Anforderung vorliegt, die Merkmalsinformationen auf der Seite des Proofsatzes zu drucken, dann erzeugt der Rasterbildprozessor 26 in Schritt 104 eine Rasterspeicherdatei für die Proofseite unter Verwendung der Merkmale in dem Druckauftrag. In Schritt 108 rastert der Rasterbildprozessor 26 die Seiteninformationen weiter auf und speichert die Seiteninformationen in derselben Rasterspeicherdatei, also die Druckauftragsdaten zusammen mit den Merkmalsinformationen. In Schritt 110 wird die Proofseite gedruckt, und zwar derart, dass die Merkmalsinformationen ebenfalls auf der Seite gedruckt werden.

Nach dem Drucken in Schritt 110 ermittelt der Rasterbildprozessor 26 in Schritt 112, ob alle Seiten des Druckauftrags gedruckt worden sind. Wenn festgestellt worden ist, dass noch weitere Seiten gedruckt werden müssen, dann kehrt der Rasterbildprozessor 26 zu Schritt 102 zurück und ermittelt, ob für die nächste Seite die Merkmalsinformationen auf der Seite gedruckt werden müssen. Der Vorgang von Schritt 102 bis Schritt 110 wird für die nächste Seite wiederholt. Der Vorgang wird so lange wiederholt, bis alle Proofseiten gedruckt sind.

Sobald alle Seiten des Proofsatzes gedruckt worden sind, wird der Druckauftrag in Schritt 114 in eine Warteschlange gestellt. Der Auftrag bleibt so lange in der Warteschlange, bis der Bediener den Auftrag freigibt. In Schritt 116 wird ermittelt, ob der Bediener den Auftrag freigibt. Bei Freigabe wird der Druckauftrag in Schritt 118 aus der Warteschlange herausgenommen, so dass der eigentliche Auftrag gedruckt wird. Wenn der Bediener in Schritt 116 den Auftrag nicht freigibt, dann wird der Auftrag in Schritt 120 gestrichen und ohne ihn zu drucken aus der Warteschlange gelöscht.

Wenn die Merkmalsinformationen auf der Proofseite gedruckt werden, werden sie normalerweise in einer anderen Schrift als der Haupttext gedruckt, beispielsweise mit einem Grauanteil von 50%, um die Merkmalsinformationen von dem Haupttext unterscheiden zu können. Ein Beispiel für eine derartige Schrift ist eine Wasserzeichenschrift, obwohl praktisch beliebige Schriften verwendbar sind. Bei Verwendung einer Wasserzeichenschrift lassen sich die Merkmalsinformationen über dem Haupttext drucken.

Art und Umfang der auf den Seiten des Proofsatzes gedruckten Merkmalsinformationen können selbstverständlich unterschiedlich sein. Sie können Merkmale auf Auftragsebene und/oder Seitenebene umfassen. Die Merkmalsinformationen brauchen zudem nicht auf jeder Seite des Proofsatzes gedruckt zu werden. Beispielsweise könnten Merkmalsinformationen auf Auftragsebene nur auf der ersten Seite des Auftrags gedruckt werden, ohne überhaupt Merkmalsinformationen auf Seitenebene zu drucken. Zudem kann es wünschenswert sein, nur ausgewählte Merkmale zu drucken, wobei diese Merkmale nur auf bestimmten Seiten zur Anwendung kommen. Ein gängiges Merkmal von Druckaufträgen ist beispielsweise Simplex/Duplex. Im Simplex-Druck wird die Seite einseitig bedruckt, im Duplex-Druck wird sie beidseitig bedruckt. Es kann wünschenswert sein, Informationen bezüglich des Simplex-/Duplex-Merkmals auf den Proofseiten zu drucken, um sich zu vergewissern, wo sich das Merkmal in dem Dokument ändert. Mithilfe der vorliegenden Erfindung werden die Informationen auf den Seiten des Proofsatzes gedruckt, und der Bediener kann das Merkmal mit den Druckergebnissen abstimmen. Falls notwendig, kann der Bediener ermitteln, wo sich das Merkmal ändert, um entsprechende Änderungen an der Merkmalseinstellung vorzunehmen.

Der Bediener oder jede andere Person, die die Seite des Proofsatzes betrachtet, ist mithilfe der vorliegenden Erfindung in der Lage, die der Seite zugeordneten Merkmalsinformationen zu erkennen, die bewirkt hat, dass die Seite in dem Proofsatz so gedruckt worden ist, wie sie gedruckt worden ist. Durch das Vorhandensein dieser Informationen ist es einfacher, die Merkmale einzustellen, falls die Proofseite nicht in gewünschter Weise gedruckt worden ist.

Obwohl die Erfindung mit besonderem Bezug auf bevorzugte Ausführungsbeispiele beschrieben wurde, ist die Erfindung nicht darauf beschränkt. Beispielsweise ist die Erfindung mit verschiedenen Protokollen verwendbar und ist nicht auf die hier beschriebenen Protokolle beschränkt. Soweit nicht anders angegeben, sind die Ansprüche nicht auf die Reihenfolge oder die Elemente beschränkt. Daher können innerhalb des Schutzbereichs der nachstehenden Ansprüche Änderungen und Abwandlungen der Erfindung vorgenommen werden.

### Liste der Bezugszeichen

- 10: Drucker
- 12: Bedieneroberfläche
- 14: Endverarbeitungseinrichtungen
- 16: Netz
- 26: Rasterbildprozessor
- 27: Druckwarteschlange
- 30: Verarbeitungseinheit
- 32: Druckauftragsspeicher

## Patentansprüche

1. Vorrichtung zum digitalen Drucken mit einem digitalen Drucker (10) und einer dem digitalen Drucker (10) zugeordneten Datenverarbeitungseinheit, wobei die Datenverarbeitungseinheit in der Lage ist, einen Druckauftrag in digitaler Form entgegenzunehmen, und zu ermitteln, ob der Druckauftrag ein Merkmal beinhaltet, das das Drucken eines Proofsatzes des Druckauftrags erforderlich macht, **dadurch gekennzeichnet, dass** die Datenverarbeitungseinheit zudem in der Lage ist zu ermitteln, ob laut Druckauftrag bestimmte Merkmale, welche den Druckauftrag steuern, auf Auftrags- und/oder Seitenebene, zur Unterstützung bei der Verarbeitung des Druckauftrags, auf einer Proofseite aber nicht im schlußendlichen Druckauftrag gedruckt werden sollen.

2. Vorrichtung nach Anspruch 1, **dadurch gekennzeichnet, dass** die Datenverarbeitungseinheit ein Rasterbildprozessor 26 ist.

3. Vorrichtung nach Anspruch 1 oder 2, **dadurch gekennzeichnet, dass** die Vorrichtung so ausgebildet ist, dass, nachdem die Datenverarbeitungseinheit ermittelt hat, ob bestimmte Informationen und Merkmale auf der Proofseite gedruckt werden sollen, der Proofsatz von dem digitalen Drucker (10) unter Einbeziehung der Merkmalsinformationen auf ausgewählten Seiten des Proofsatzes gedruckt wird.

4. Vorrichtung nach einem der Ansprüche 1-3, **dadurch gekennzeichnet, dass** die Vorrichtung so ausgebildet ist, dass die Merkmalsinformationen in einer anderen Schrift gedruckt werden als die Schrift des Haupttextes des Druckauftrags.

5. Vorrichtung nach einem der Ansprüche 1-3, **dadurch gekennzeichnet, dass** die Vorrichtung so ausgebildet ist, das die Merkmalsinformationen in einer Schrift gedruckt werden, die grösser als die des Haupttextes ist.

6. Vorrichtung nach einem der Ansprüche 1-5, **dadurch gekennzeichnet, dass** die Schrift eine Wasserzeichenschrift in einer Grauschattierung ist.

7. Vorrichtung nach einem der Ansprüche 1-6, **dadurch gekennzeichnet, dass** die Vorrichtung so ausgebildet ist, dass die Merkmalsinformationen vor dem Haupttext gerastert werden, so dass der Haupttext über die Merkmalsinformationen gedruckt wird.

8. Verfahren zum Drucken eines Proofsatzes eines Dokuments, wobei das Verfahren folgende Schritte umfasst:
Analysieren eines Druckauftrags, um zu ermitteln, ob ein Proofsatz gedruckt werden soll;
weiteres Analysieren des Druckauftrags, um zu ermitteln, ob Merkmalsinformationen, welche den Druckauftrag steuern, auf Auftrags- und/oder Seitenebene aus dem Druckauftrag auf den Seiten des Proofsatzes gedruckt werden sollen; und
Rastern der Seiten des Druckauftrags und Speichern der gerasterten Seiten in einer Rasterspeicherdatei, wobei diese Datei gerasterte Informationen bezüglich der Merkmale enthält;
Drucken der Seiten des Proofsatzes, wobei die Merkmalsinformationen auf Auftrags- und/oder Seitenebene auf den Seiten des Proofsatzes gedruckt werden.

9. Verfahren nach Anspruch 8, **dadurch gekennzeichnet, dass** die Merkmalsinformationen in einer anderen Schrift gedruckt werden als der Text des Druckauftrags.

10. Verfahren nach Anspruch 8 oder 9, **dadurch gekennzeichnet, dass** die Merkmalsinformationen in einer grösseren Schrift gedruckt werden als der Text des Druckauftrags.

11. Verfahren nach einem der Ansprüche 8-10, **dadurch gekennzeichnet, dass** die Merkmalsinformationen vor dem Text des Druckauftrags gerastert werden, so dass der Text des Druckauftrags über die Merkmalsinformationen gedruckt wird.

12. Verfahren nach einem der Ansprüche 8-11, **dadurch gekennzeichnet, dass** die Schrift eine Wasserzeichenschrift in einer Grauschattierung ist.

13. Verfahren nach einem der Ansprüche 8-12, **dadurch gekennzeichnet, dass** die Merkmalsinformationen sowohl Merkmale auf Auftragsebene als auch auf Seitenebene umfassen.

14. Verfahren nach einem der Ansprüche 8 bis 13, **dadurch gekennzeichnet, dass** auf ausgewählten Seiten des Proofsatzes Merkmalsinformationen auf Auftrags- und/oder Seitenebene aufgedruckt werden.

15. Verfahren nach einem der Ansprüche 8 bis 14, das zudem folgende Schritte umfasst:
Speichern des Druckauftrags in einer Warteschlange;
Freigeben des Druckauftrags aus der Warteschlange bei Empfang von Bedieneranweisungen; und
Drucken des Druckauftrags in endgültiger Form, wobei die Merkmalsinformationen auf Auftrags- und/oder Seitenebene unterdrückt werden, die zuvor auf den Seiten des Proofsatzes gedruckt worden waren.

16. Verfahren nach Anspruch 15, **dadurch gekennzeichnet, dass** der Druckauftrag in der Warteschlange gespeichert wird, nachdem der Proofsatz gedruckt worden ist.

## Claims

1. Apparatus for digital printing having a digital printer (10) and a data processor associated with said digital printer (10), wherein the data processor is capable of receiving a print job in digital form and of determining whether the print job includes a feature requiring the printing of a proof set of the print job, **characterized in that** the data processor is further capable of determining whether in accordance with the print job certain features, which control the print job on the job level or the page level for assisting in the processing of the print job should be printed on a proof page but not in the final print.

2. The Apparatus of claim 1, **characterized in that** the data processor is a raster imaging processor (26).

3. The Apparatus of claim 1 or 2, **characterized in that** the apparatus is configured such that after the data processor has determined whether certain information and features should be printed on the proof page, the proof set is printed by the digital printer (10) with the feature information on selected pages of the proof set.

4. The Apparatus of any one of claims 1 to 3, **characterized in that** the apparatus is configured such that the feature information is printed in a font different than the font of the principal text of the print job.

5. The Apparatus of any one of claims 1 to 3, **characterized in that** the apparatus is configured such that the feature information is printed in a font that is larger than that of the principal text.

6. The Apparatus of any one of claims 1 to 5, **characterized in that** the font is a watermark font in a shade of gray.

7. The Apparatus of any one of claims 1 to 6, **characterized in that** the apparatus is configured such that the feature information is rasterized before the principal text, such that the principal text is printed over the feature information.

8. A method of printing a proof set of a document comprising the steps of:
analyzing a print job to determine whether a proof set should be printed;
further analyzing the print job to determine whether any feature information which controls the print job on the job level or the page level from the print job should be printed on the pages of the roof set; and
rasterizing the pages of the print job and storing the rasterized pages in a raster memory file, said file including rasterized information relating to the features;
printing the pages of the proof set, wherein the feature information on the job level or the page level is printed on the pages of the proof set.

9. The method of claim 8, **characterized in that** the feature information is printed in a different font than the text of the print job.

10. The method of claim 8 or 9, **characterized in that** the feature information is printed in a larger font than the text of the print job.

11. The method of any one of claims 8 to 10, **characterized in that** the feature information is rasterized before the text of the print job, such that the print job text is printed over the feature information.

12. The method of any one of claims 8 to 11, **characterized in that** the font is a watermark font in a shade of gray.

13. The method of any one of claims 8 to 12, **characterized in that** the feature information comprises both features on the job level and on the page level.

14. The method of any one of claims 8 to 13, **characterized in that** on selected pages of the proof set feature information on the job level and/or on the page level are printed.

15. The method of any one of claims 8 to 14, further comprising the steps of:
storing the print job in a hold queue;
releasing the print job from the hold queue upon receipt of operator instructions; and
printing the print job in final form, suppressing the feature information that was previously printed on the pages of the proof set.

16. The method of claim 15 wherein the print job is stored in the hold queue after the proof set is printed.

## Revendications

1. Dispositif d'impression numérique comportant une imprimante numérique (10) et une unité de traitement de données affectée à l'imprimante numérique (10), l'unité de traitement de données étant en mesure d'accepter un ordre d'impression sous forme numérique et de déterminer si l'ordre d'impression contient une caractéristique qui rend l'impression d'un jeu d'épreuve de l'ordre d'impression nécessaire, **caractérisé en ce que** l'unité de traitement de données est, de plus, en mesure de déterminer si selon l'ordre d'impression, il faut imprimer certaines caractéristiques, qui commandent l'ordre d'impression, sur une page d'épreuve mais pas dans l'ordre définitif d'impression, au niveau de l'ordre et/ou des pages, afin d'aider au traitement de l'ordre d'impression.

2. Dispositif selon la revendication 1, **caractérisé en ce que** l'unité de traitement de données est un processeur d'image tramée 26.

3. Dispositif selon la revendication 1 ou 2, **caractérisé en ce qu'**il est conçu de telle façon qu'après que l'unité de traitement de données a déterminé si certaines informations et caractéristiques doivent être imprimées sur une page d'épreuve, le jeu d'épreuve est imprimée par l'imprimante numérique (10) en intégrant les informations de caractéristique sur les pages sélectionnées de l'jeu d'épreuve.

4. Dispositif selon l'une quelconque des revendications 1 à 3, **caractérisé en ce qu'**il est conçu de telle façon que les informations de caractéristique sont imprimées dans une autre police que la police du texte principal de l'ordre d'impression.

5. Dispositif selon l'une quelconque des revendications 1 à 3, **caractérisé en ce qu'**il est conçu de telle façon que les informations de caractéristique sont imprimées dans une police plus grande que celle du texte principal.

6. Dispositif selon l'une quelconque des revendications 1 à 5, **caractérisé en ce que** la police est une écriture en filigrane sur fond grisé.

7. Dispositif selon l'une quelconque des revendications 1 à 6, **caractérisé en ce qu'**il est conçu de telle façon que les informations de caractéristique sont tramées avant le texte principal de manière à imprimer celui-ci via les informations de caractéristique.

8. Procédé d'impression d'un jeu d'épreuve d'un document, le procédé comportant les étapes suivantes :
Analyse d'un ordre d'impression afin de déterminer si un jeu d'épreuve doit être imprimé ;
poursuite de l'analyse de l'ordre d'impression afin de déterminer si des informations de caractéristique, qui commandent l'ordre d'impression, doivent être imprimées à partir de l'ordre d'impression sur les pages du jeu d'épreuve, au niveau de l'ordre et/ou des pages ; et
tramage des pages de l'ordre d'impression et enregistrement des pages tramées dans un fichier d'enregistrement des trames, ce fichier contenant des informations tramées concernant les caractéristiques ;
impression des pages du jeu d'épreuve, les informations de caractéristique étant imprimées sur les pages du jeu d'épreuve au niveau de l'ordre et/ou des pages.

9. Procédé selon la revendication 8, **caractérisé en ce que** les informations de caractéristique sont imprimées dans une autre police que la police du texte de l'ordre d'impression.

10. Procédé selon la revendication 8 ou 9, **caractérisé en ce que** les informations de caractéristique sont imprimées dans une police plus grande que celle du texte de l'ordre d'impression.

11. Procédé selon l'une quelconque des revendications 8 à 10, **caractérisé en ce que** les informations de caractéristique sont tramées avant le texte de l'ordre d'impression de manière à imprimer celui-ci via les informations de caractéristique.

12. Procédé selon l'une quelconque des revendications 8 à 11, **caractérisé en ce que** la police est une écriture en filigrane sur fond grisé.

13. Procédé selon l'une quelconque des revendications 8 à 12, **caractérisé en ce que** les informations de caractéristique englobent aussi bien des caractéristiques au niveau de l'ordre qu'au niveau des pages.

14. Procédé selon l'une quelconque des revendications 8 à 13, **caractérisé en ce que**, sur des pages sélectionnées du jeu d'épreuve, des informations de caractéristique sont imprimées au niveau de l'ordre et/ou au niveau des pages.

15. Procédé selon l'une quelconque des revendications 8 à 14, lequel comprend, de plus, les étapes suivantes :
enregistrement de l'ordre d'impression dans une file d'attente ;
validation de l'ordre d'impression à partir de la file d'attente en cas de réception d'instructions de l'utilisateur ; et
impression de l'ordre d'impression sous sa forme définitive, les informations de caractéristique, qui avaient été préalablement imprimées sur les pages du jeu d'épreuve, étant supprimées au niveau de l'ordre et/ou des pages.

16. Procédé selon la revendication 15, **caractérisé en ce que** l'ordre d'impression est enregistré dans la file d'attente, après que le jeu d'épreuve a été imprimé.
